(19) Europäisches Patentamt
European Patent Office
Office européen des brevets

(11) EP 3 929 240 A1

(12) EUROPEAN PATENT APPLICATION
published in accordance with Art. 153(4) EPC

(43) Date of publication:
**29.12.2021 Bulletin 2021/52**

(21) Application number: **20918135.3**

(22) Date of filing: **02.10.2020**

(51) Int Cl.:
***C08K 5/34*** *(2006.01)* ***C08L 83/04*** *(2006.01)*
***C08K 3/013*** *(2018.01)*

(86) International application number:
**PCT/JP2020/037637**

(87) International publication number:
**WO 2021/161580 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.02.2020 JP 2020022569**

(71) Applicant: **Fuji Polymer Industries Co., Ltd.**
**Nagoya-shi, Aichi 460-0012 (JP)**

(72) Inventors:
- **IWAI Makoto**
  **Nagoya-shi, Aichi 463-0026 (JP)**
- **SUZUMURA Katsuyuki**
  **Nagoya-shi, Aichi 463-0026 (JP)**
- **NAKAJIMA Yuji**
  **Nagoya-shi, Aichi 463-0026 (JP)**

(74) Representative: **Diehl & Partner**
**Patent- und Rechtsanwaltskanzlei mbB**
**Erika-Mann-Straße 9**
**80636 München (DE)**

# (54) HEAT RESISTANT SILICONE RESIN COMPOSITION AND HEAT RESISTANT SILICONE RESIN COMPOSITE MATERIAL

(57) A heat-resistant silicone resin composition contains a silicone resin and a heat resistance improver. The heat resistance improver is an organic polycyclic aromatic compound having one or more secondary amino groups and one or more ketone groups in a ring structure. The organic polycyclic aromatic compound may be, e.g., quinacridone (P.V. 19) represented by the following Chemical Formula 1. A silicone resin composite material of the present invention includes the heat-resistant silicone resin composition and at least one filler selected from the group consisting of an inorganic filler and an organic filler. The at least one filler is contained in the heat-resistant silicone resin composition. Thus, the silicone resin composition and the silicone resin composite material have high heat resistance.

[Chemical Formula 1]

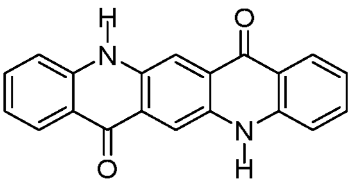

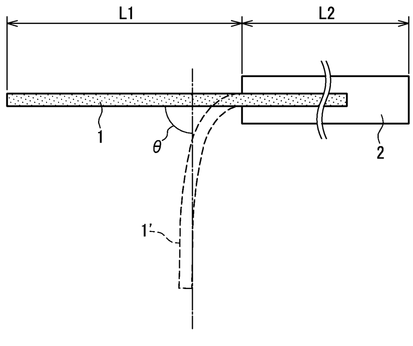


FIG. 2

EP 3 929 240 A1

## Description

Technical Field

The present invention relates to a silicone resin composition and a silicone resin composite material that have high heat resistance.

Background Art

With the significant improvement in performance of semiconductors such as CPUs in recent years, the amount of heat generated by them has become extremely large. For this reason, heat dissipating materials are attached to electronic components that may generate heat, and a thermally conductive silicone sheet is used to improve the adhesion between the heat dissipating materials and semiconductors. The thermally conductive silicone sheet has been required to have flexibility and high thermal conductive properties as devices become smaller in size, more sophisticated, and more highly integrated Patent Document 1 proposes an improvement in the heat resistance of silicone rubber by the combination of titanium oxide and iron oxide. Patent Document 2 proposes a silicone thermally conductive material containing a phthalocyanine compound. Patent Document 3 proposes a gel material containing a phthalocyanine compound and having improved thermal stability. Patent Document 4 proposes heat-resistant condensation curable silicone containing a diphenylsilane crosslinking agent. Patent Document 5 proposes a silicone resin having a Si-O-Ce bond and a Si-O-Ti bond to improve heat resistance. Patent Document 6 proposes a thermally conductive material that contains a disk-shaped polycyclic aromatic having an organic functional group. Patent Document 7 proposes a heat-resistant silicone gel containing carbon black or carbon nanotube.

Prior Art Documents

Patent Documents

Patent Document 1: JP 2016-518468 A
Patent Document 2: JP 2014-503680 A
Patent Document 3: JP 2014-534292 A
Patent Document 4: JP 2017-057386 A
Patent Document 5: JP 2019-167473 A
Patent Document 6: JPWO 2017-131007 A1
Patent Document 7: JP 2017-014399 A

Disclosure of Invention

Problem to be Solved by the Invention

The conventional thermally conductive silicone sheet has relatively high heat resistance, but still requires much higher heat resistance. Specifically, the thermal conductive properties of the silicone sheet can be enhanced by increasing the filling amount of a filler or using a high thermally conductive filler. However, the thermally conductive silicone sheet containing such a filler may become hard at high temperatures. In this regard, the heat resistance of the silicone sheet should be improved It is also important for the silicone sheet to have heat resistance when using, e.g., a sealing agent, a heat insulating agent, and an electromagnetic wave absorbing agent.

Moreover, in the field of semiconductors, contamination by metallic impurities has been a problem. Therefore, there has been a need for a heat dissipating member that does not include a heat resistance improver and a pigment which are made of organic metal oxide or organic metal complex.

To solve the above conventional problems, the present invention provides a silicone resin composition and a silicone resin composite material that contain an organic heat resistance improver and have high heat resistance.

Means for Solving Problem

A heat-resistant silicone resin composition of the present invention contains a silicone resin and a heat resistance improver. The heat resistance improver is an organic polycyclic aromatic compound having one or more secondary amino groups and one or more ketone groups in a ring structure.

A heat-resistant silicone resin composite material of the present invention includes the heat-resistant silicone resin composition and at least one filler selected from the group consisting of an inorganic filler and an organic filler. The at least one filler is contained in the heat-resistant silicone resin composition.

## Effects of the Invention

The heat-resistant silicone resin composition and the heat-resistant silicone resin composite material of the present invention contain a silicone resin and a heat resistance improver. The heat resistance improver is an organic polycyclic aromatic compound having one or more secondary amino groups, one or more ketone groups, and no azo group in a ring structure. With this configuration, the silicone resin composition and the silicone resin composite material can have high heat resistance. Thus, the heat-resistant silicone resin composition and the heat-resistant silicone resin composite material do not easily become hard even at high temperatures, and in addition they use the heat resistance improver containing no metal atom. This not only eliminates the problem of contamination by metallic impurities, but also can be a great advantage for electronic and electrical components including semiconductors.

## Brief Description of Drawings

[FIG. 1] FIGS. 1A to 1B are diagrams illustrating a method for measuring a thermal conductivity of a sample in an example of the present invention.
[FIG. 2] FIG. 2 a diagram illustrating a method for performing a heat resistance test (flexibility test) of a sample in an example of the present invention.
[FIG. 3] FIG. 3 is a measurement photograph of a heat resistance test (flexibility test) of a sample in an example of the present invention.

## Description of the Invention

The present invention is directed to a heat-resistant silicone resin composition that contains a silicone resin and a heat resistance improver. The heat resistance improver is an organic polycyclic aromatic compound having one or more secondary amino groups, one or more ketone groups, and no azo group in a ring structure. Examples of the heat resistance improver include anthraquinone, quinacridone, diketopyrrolopyrrole.
These compounds may be separately mixed or reacted with a compound having 1 molar equivalent or less of epoxy group relative to the amount of the amino group contained in each of the compounds. The compounds thus obtained are also effective. Examples of the epoxy compound include an organic compound and an organic silicon compound having a glycidyl group and a cyclohexyl epoxy group. The addition of the epoxy group may control the effect of the amino group on a thermal degradation phenomenon of the silicone compound, and thus may result in better heat resistance.
The mechanism of improving the heat resistance due to the presence of the above compounds is not clear, but can be attributed to the fact that these compounds absorb or reduce the substances that cause pyrolysis, such as thermal radicals generated at high temperatures. The organic polycyclic aromatic compound (i.e., the heat resistance improver) of the present invention is preferably free of azo groups. This is because the azo group may induce decomposition by heat or light, and the effect of the azo group on the properties of the silicone resin or the composite material can also be a concern.
Anthraquinone is represented by, e.g., P.B. 60 (Chemical Formula 1) as follows. P.B. 60 indicates the Color Index (CI) name and number, which is jointly maintained by the Society of Dyers and Colourists and the American Association of Textile Chemists and Colorists. The numbers assigned to the following compounds are in accordance with the CI name and number.

[Chemical Formula 1]

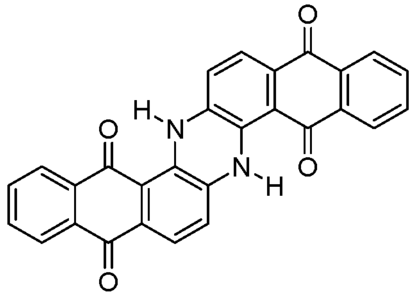

Quinacridone is represented by, e.g., P.V. 19 (Chemical Formula 2) and P.R. 122 (Chemical Formula 3).

[Chemical Formula 2]

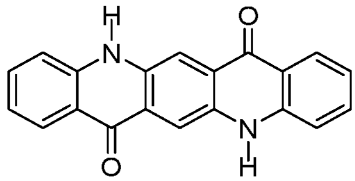

[Chemical Formula 3]

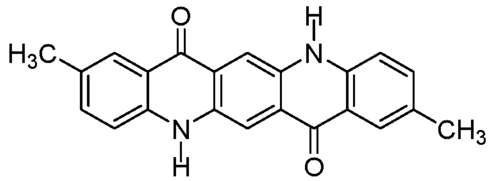

Diketopyrrolopyrrole is represented by P.R. 264 (Chemical Formula 4).

[Chemical Formula 4]

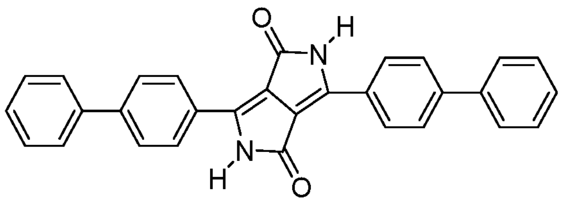

As described above, a compound may be obtained by mixing or reacting anthraquinone with the epoxy compound in an amount of 1 mole times the amount of anthraquinone. Specifically, anthraquinone represented by the Chemical Formula 1 may be mixed or reacted with the epoxy compound such as 3-glycidoxypropyltrimethoxysilane represented by the following Chemical Formula 5 in an amount of 1 mole times the amount of anthraquinone.

[Chemical Formula 5]

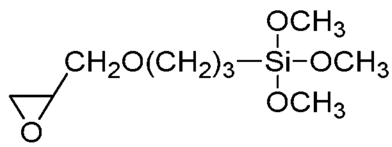

Examples of the epoxy compound include the following: organic compounds having an epoxy group such as phenyl glycidyl ether, methyl glycidyl ether, butyl glycidyl ether, styrene oxide, glycidyl butyrate, glycidyl hexanoate, glycidyl stearate, glycidyl methacrylate, 1,2-epoxy-4-vinylcyclohexane, and 2,2'-(4-hydroxyphenyl)propanediglycidyl ether; and organic silicon compounds such as 3-glycidoxypropyltriethoxysilane, 3-glycidoxypropylmethyldimethoxysilane, 3-glycidoxyhexyltrimethoxysilane, 2-(3,4-epoxycyclohexyl)ethyltrimethoxysilane, 2-(3,4-epoxycyclohexyl)ethylmethyldimethoxysilane, 2-(3,4-epoxycydohexyl)ethyltriethoxysilane, and epoxy-modified silicone.

The content of the heat resistance improver is preferably 0.001 to 10 parts by mass, more preferably 0.002 to 5 parts by mass, further preferably 0.003 to 3 parts by mass, and particularly preferably 0.003 parts by mass or more and less than 0.5 parts by mass with respect to 100 parts by mass of the silicone resin. When the content of the heat resistance improver is within the above range, the heat resistance can be improved

The heat-resistant silicone resin composition is preferably, e.g., in a liquid state, a gel state, or a rubber state. The liquid state includes oil, grease, putty, etc. The heat resistance improver may be added in the form of powder or mixed with a resin to prepare a masterbatch. The resin used for the masterbatch is preferably a silicone polymer. The silicone polymer may be either a curable silicone polymer or a silicone polymer having no reactive group, and both of them may be used. This allows the heat resistance improver to be uniformly mixed with the silicone resin.

A heat-resistant silicone resin composite material of the present invention contains the heat-resistant silicone resin composition and a filler that is contained in the heat-resistant silicone resin composition. The content of the filler is preferably 1 to 7000 parts by mass, more preferably 10 to 6000 parts by mass, and further preferably 50 to 5000 parts by mass with respect to 100 parts by mass of the heat-resistant silicone resin.

The silicone resin composite material is in at least one state selected from a gel state and a rubber state and may be in the form of a sheet. The silicone resin composite material in the form of a sheet can easily be located between a heat generating electronic component and a heat dissipating material. The silicone resin composite material is suitable as a TIM (thermal interface material) to be interposed between a heat generating member such as a semiconductor and a heat dissipating material.

The hardness and viscosity of the silicone resin composition are not particularly limited The heat-resistant silicone resin composition containing non-reactive silicone oil or gum and a heat-resistant additive may have a viscosity of 0.65 mPa·sec to 1,000,000 mPa/sec, and more preferably a viscosity of 50 mPa·sec to 100,000 mPa/sec. When the silicone resin composition is used as a silicone gel cured product that does not contain a filler, the cured product may have a penetration of preferably 20 or more, and more preferably 40 or more. The penetration (flexibility) in this range is sufficient for the silicone gel. When the silicone resin composition is used as a flexible sheet-like cured product that contains a filler, the cured product may have an Asker C hardness of preferably 70 or less, and more preferably 50 or less. The sheet-like cured product with an Asker C hardness of 70 or less has sufficient hardness (flexibility). Moreover, when the silicone resin composite material in the form of a sheet is flexible enough to be inserted between members, it is important to maintain the flexibility. The flexibility is such that the sheet can be bent freely, preferably at an angle of 90° or more, with a small force. In particular, the flexibility of the sheet should not be reduced due to thermal degradation. For the degree of flexibility, the sheet can be bent preferably at an angle of 30°, and more preferably at an angle of 45°. Further, when the silicone resin composite material is used as a molded silicone rubber composite material, it is preferably in the rubber state and has a hardness of preferably 20 to 90, and more preferably 30 to 80 measured by a durometer A Any curing and crosslinking methods may be used when the silicone resin is cured and cross-linked to form the silicone resin composition and the silicone resin composite material. For example, there are various methods such as allowing an alkenyl group and a SiH group to undergo an addition reaction, cross-linking an alkenyl group and an alkyl group with peroxide, and subjecting silanol and an alkoxy group to condensation. These methods may also be used in combination. In particular, it is preferable that the silicone resin is cured by the addition reaction between the alkenyl group and the SiH group in the presence of a catalyst such as platinum because, e.g., no by-product is produced during the reaction, the reaction rate can be controlled, and the curing reaction proceeds smoothly to the deep part of the molded product.

The heat-resistant silicone resin composite material of the present invention is preferably formedinto a sheet. The silicone resin composite material in the form of a sheet is suitable for mounting on electronic components or the like. The sheet-like heat-resistant silicone resin composite material containing the thermally conductive filler has a thickness of preferably 0.2 to 10 mm. The thermal conductivity of the thermally conductive sheet is preferably 0.8 W/m·K or more, and more preferably 1.0 W/m·K or more. The thermally conductive sheet with a thermal conductivity of 0.8 W/m·K or more is suitable for conducting heat from a heat generating member to a heat dissipating material.

Hereinafter, an example of the heat-resistant silicone resin composition and an example of the heat-resistant silicone resin composite material will be described. The oil-like or gum-like heat-resistant silicone resin composition contains the following components (E) and (H). The content of the component (E) is 0.001 to 10 parts by mass with respect to 100 parts by mass of the component (H). Moreover, the gel-like or rubber-like heat-resistant silicone resin composition contains the following components (A) to (C) and (E). These components (A) to (C) and (E) are preferably mixed with optional components such as (F), (G), and (H) and then cross-linked The heat-resistant silicone resin composite material contains the following components (A) to (E). These components (A) to (E) are preferably mixed with the optional components such as (F), (G), and (H) and then cross-linked.

(A) Base polymer component: an organopolysiloxane containing an average of one or more silicon atoms bonded to alkenyl groups per molecule
(B) Crosslinking component: an organopolysiloxane containing an average of one or more silicon atoms bonded to hydrogen atoms per molecule, in which the number of moles of the organopolysiloxane is 0.01 to 3 moles with respect to 1 mole of the silicon atom-bonded alkenyl groups in the component A
(C) Catalyst component: a platinum group metal catalyst at a concentration of 0.01 to 1000 ppm based on the weight of metal atoms with respect to the component A
(D) Inorganic filler: 100 to 4000 parts by mass with respect to 100 parts by mass of an addition curable silicone polymer component (component A+ component B)
(E) Heat resistance improver: 0.001 to 10 parts by mass with respect to 100 parts by mass of the addition curable silicone polymer component (component A + component B)
(F) A silane coupling agent, which may be further added in an amount of 0.1 to 10 parts by mass with respect to 100 parts by mass of the addition curable silicone polymer component (component A + component B)
(G) An inorganic particle pigment, which may be further added in an amount of 0.5 to 10 parts by mass with respect to 100 parts by mass of the addition curable silicone polymer component (component A + component B)
(H) An organopolysiloxane having no addition curing reactive group, which may be further added in an amount of 0.5 to 50 parts by mass with respect to 100 parts by mass of the addition curable silicone polymer component (component A+ component B)

Hereinafter, each component will be described

(1) Base polymer component (component A)

The base polymer component is an organopolysiloxane containing one or more alkenyl groups bonded to silicon atoms per molecule. The organopolysiloxane containing two alkenyl groups is the base resin (base polymer component) of the heat-resistant silicone resin composition and the heat-resistant silicone resin composite material of the present invention. In the organopolysiloxane, two or more alkenyl groups having 2 to 8 carbon atoms, and particularly 2 to 6 carbon atoms such as vinyl groups or allyl groups, are bonded to the silicon atoms per molecule. The viscosity of the organopolysiloxane is preferably 10 to 100,000 mPa·s, and more preferably 100 to 10,000 mPa·s at 25°C in terms of workability and curability.

Specifically, an organopolysiloxane represented by the following general formula (Chemical Formula 6) is used as an example of the base polymer. The organopolysiloxane contains an average of one or more alkenyl groups per molecule that are bonded to silicon atoms at both ends of the molecular chain. The organopolysiloxane is a linear or branched organopolysiloxane in which the other substituents are blocked with alkyl groups or phenyl groups. The viscosity of the organopolysiloxane is preferably 10 to 100,000 mPa·s at 25°C in terms of workability and curability. Moreover, the organopolysiloxane may either include a branched structure (trifunctional siloxane units) in the molecular chain or have an alkenyl group in the side chain.

[Chemical Formula 6]

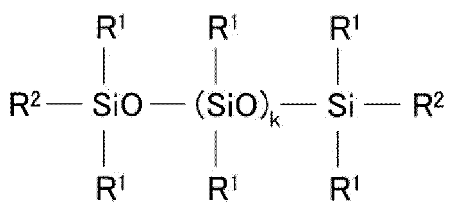

In the formula, $R^1$ represents substituted or unsubstituted monovalent hydrocarbon groups that are the same as or different from each other and have no aliphatic unsaturated bond, $R^2$ represents alkenyl groups, and k represents 0 or a positive integer. The monovalent hydrocarbon groups represented by $R^1$ have, e.g., 1 to 10 carbon atoms, and more preferably 1 to 6 carbon atoms. Specific examples of the monovalent hydrocarbon groups include the following: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups; and substituted forms of these groups in which some or all hydrogen atoms are

substituted by halogen atoms (fluorine, bromine, chlorine, etc.) or cyano groups, including halogen-substituted alkyl groups such as chloromethyl, chloropropyl, bromoethyl, and trifluoropropyl groups and cyanoethyl groups. The alkenyl groups represented by $R^2$ have, e.g., 2 to 8 carbon atoms, and more preferably 2 to 6 carbon atoms. Specific examples of the alkenyl groups include vinyl, allyl, propenyl, isopropenyl, butenyl, isobutenyl, hexenyl, and cyclohexenyl groups. In particular, the vinyl group is preferred In the general formula (Chemical Formula 2), k is typically 0 or a positive integer satisfying $0 \leq k \leq 10000$, preferably $5 \leq k \leq 2000$, and more preferably $10 \leq k \leq 1200$.

The component A may also include an organopolysiloxane having three or more, typically 3 to 30, and preferably about 3 to 20, alkenyl groups bonded to silicon atoms per molecule. The alkenyl groups have 2 to 8 carbon atoms, and particularly 2 to 6 carbon atoms and can be, e.g., vinyl groups or allyl groups. The molecular structure may be a linear, ring, branched, or three-dimensional network structure. The organopolysiloxane is preferably a linear organopolysiloxane in which the main chain is composed of repeating diorganosiloxane units, and both ends of the molecular chain are blocked with triorganosiloxy groups. The viscosity of the linear organopolysiloxane may be 10 to 100,000 mPa·s, and particularly 100 to 10,000 mPa·s at 25°C.

Each of the alkenyl groups may be bonded to any part of the molecule. For example, the alkenyl group may be bonded to either a silicon atom that is at the end of the molecular chain or a silicon atom that is not at the end (but in the middle) of the molecular chain. In particular, a linear organopolysiloxane represented by the following general formula (Chemical Formula 7) is preferred. The linear organopolysiloxane has 1 to 3 alkenyl groups on each of the silicon atoms at both ends of the molecular chain. In this case, however, if the total number of the alkenyl groups bonded to the silicon atoms at both ends of the molecular chain is less than 3, at least one alkenyl group is bonded to the silicon atom that is not at the end (but in the middle) of the molecular chain (e.g., as a substituent in the diorganosiloxane unit). As described above, the viscosity of the linear organopolysiloxane is preferably 10 to 100,000 mPa·s at 25°C in terms of workability and curability. Moreover, the linear organopolysiloxane may include a small amount of branched structure (trifunctional siloxane units) in the molecular chain.

[Chemical Formula 7]

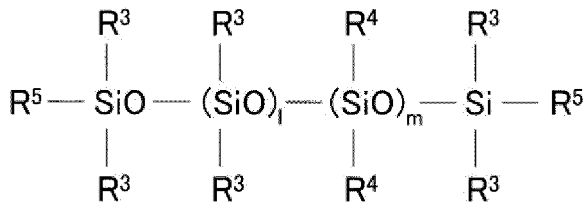

In the formula, $R^3$ represents substituted or unsubstituted monovalent hydrocarbon groups that are the same as or different from each other, and at least one of them is an alkenyl group, $R^4$ represents substituted or unsubstituted monovalent hydrocarbon groups that are the same as or different from each other and have no aliphatic unsaturated bond, $R^5$ represents alkenyl groups, and l and m represent 0 or a positive integer. The monovalent hydrocarbon groups represented by $R^3$ preferably have 1 to 10 carbon atoms, and more preferably 1 to 6 carbon atoms. Specific examples of the monovalent hydrocarbon groups include the following: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups; alkenyl groups such as vinyl, allyl, propenyl, isopropenyl, butenyl, hexenyl, cyclohexenyl, and octenyl groups; and substituted forms of these groups in which some or all hydrogen atoms are substituted by halogen atoms (fluorine, bromine, chlorine, etc.) or cyano groups, including halogen-substituted alkyl groups such as chloromethyl, chloropropyl, bromoethyl, and trifluoropropyl groups and cyanoethyl groups.

The monovalent hydrocarbon groups represented by $R^4$ also preferably have 1 to 10 carbon atoms, and more preferably 1 to 6 carbon atoms. The monovalent hydrocarbon groups may be the same as the specific examples of $R^1$, but do not include an alkenyl group. The alkenyl groups represented by $R^5$ have, e.g., 2 to 8 carbon atoms, and more preferably 2 to 6 carbon atoms. Specific examples of the alkenyl groups are the same as those of $R^2$ in the general formula (Chemical Formula 2), and the vinyl group is preferred

In the formula (Chemical Formula 7), l and m are typically 0 or positive integers satisfying $0 < l+m \leq 10000$, preferably $5 \leq 1+m \leq 2000$, and more preferably $10 \leq l+ m \leq 1200$. Moreover, l and m are integers satisfying $0 < 1/(1+m) \leq 0.2$, and preferably $0.0011 \leq l/(l+m) \leq 0.1$.

(2) Crosslinking component (component B)

The organohydrogenpolysiloxane of the component B acts as a crosslinking agent. The addition reaction (hydrosilylation) between SiH groups in the component B and alkenyl groups in the component A produces a cured product. Any organohydrogenpolysiloxane that has two or more hydrogen atoms (i.e., SiH groups) bonded to silicon atoms per molecule may be used. The molecular structure of the organohydrogenpolysiloxane may be a linear, ring, branched, or three-dimensional network structure. The number of silicon atoms in a molecule (i.e., the degree of polymerization) may be 2 to 1000, and particularly about 2 to 300.

The locations of the silicon atoms to which the hydrogen atoms are bonded are not particularly limited. The silicon atoms may be either at the ends of the molecular chain or in the side chain. The organic groups bonded to the silicon atoms other than the hydrogen atoms may be, e.g., substituted or unsubstituted monovalent hydrocarbon groups that have no aliphatic unsaturated bond, which are the same as those of $R^1$ in the general formula (Chemical Formula 2).

The organohydrogenpolysiloxane of the component B may be represented by the following general formula (Chemical Formula 8).

[Chemical Formula 8]

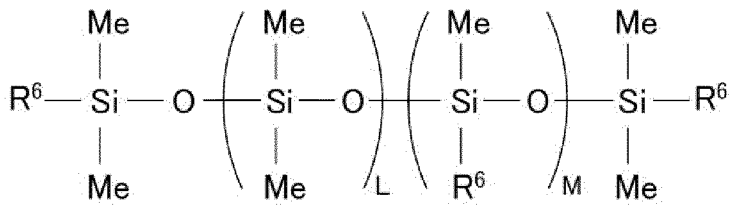

In the formula, $R^6$'s are the same as or different from each other and represent alkyl groups, phenyl groups, epoxy groups, acryloyl groups, methacryloyl groups, alkoxy groups, or hydrogen atoms, and at least one of $R^6$'s is a hydrogen atom. L represents an integer of 0 to 1000, and particularly 0 to 300, and M represents an integer of 1 to 200.

(3) Catalyst component (component C)

The catalyst component of the component C accelerates the curing of the composition. The component C may be a catalyst used for a hydrosilylation reaction. Examples of the catalyst include platinum group metal catalysts such as platinum-based, palladium-based, and rhodium-based catalysts. The platinum-based catalysts include, e.g., platinum black, platinum chloride, chloroplatinic acid, a reaction product of chloroplatinic acid and monohydric alcohol, a complex of chloroplatinic acid and olefin or vinylsiloxane, and platinum bisacetoacetate. The component C may be mixed in an amount required for curing. The amount of the component C can be appropriately adjusted in accordance with the desired curing rate or the like. The component C is preferably added at a concentration of 0.01 to 1000 ppm based on the weight of metal atoms with respect to the component A

(4) Inorganic filler (component D)

The inorganic filler is preferably at least one inorganic filler selected from a thermally conductive inorganic filler, an electromagnetic wave absorbing inorganic filler, an inorganic filler for improving heat insulation, and an inorganic filler for improving strength. Examples of the thermally conductive inorganic filler include alumina, zinc oxide, magnesium oxide, aluminum nitride, boron nitride, aluminum hydroxide, silicon carbide, and silica. These materials may be used individually or in combinations of two or more. The electromagnetic wave absorbing inorganic filler may be a soft magnetic metal powder or an oxide magnetic powder (ferrite powder). Examples of the soft magnetic metal powder include iron-based alloy powders of, e.g., Fe-Si alloy, Fe-Al alloy, Fe-Si-Al alloy (Sendust), Fe-Si-Cr alloy, Fe-Ni alloy (Permalloy), Fe-Ni-Co alloy (Mumetal), Fe-Ni-Mo alloy (Supermalloy), Fe-Co alloy, Fe-Si-Al-Cr alloy, Fe-Si-B alloy, and Fe-Si-Co-B alloy; and a carbonyl iron powder. Examples of the ferrite powder include spinel ferrites such as Mn-Zn ferrite, Mn-Mg-Zn ferrite, Mg-Cu-Zn ferrite, Ni-Zn ferrite, Ni-Cu-Zn ferrite, and Cu-Zn ferrite; and hexagonal ferrites of, e.g., W type, Y type, Z type, and M type. Among them, the carbonyl iron powder is preferably used All of these powders are magnetic powders.

Examples of the inorganic filler for improving heat insulation include glass balloon, silica balloon, Shirasu balloon, carbon balloon, alumina balloon, and zirconia balloon. In particular, the glass balloon is preferred All of these materials can improve the heat insulation effect. An organic filler for improving heat insulation may also be used instead of or in combination with the inorganic filler for improving heat insulation. Examples of the organic filler for improving heat insulation include phenol balloon, acrylonitrile balloon, and vinylidene chloride balloon.

Examples of the filler for improving strength include silica, glass fiber, carbon fiber, cellulose nanofiber, graphite,

and graphene. Among them, silica is preferably used. All of these materials can improve the strength of the composite material.

In this specification, the inorganic filler is also referred to as inorganic particles.

The thermally conductive filler may be added in an amount of preferably 1 to 7000 parts by mass, and more preferably 100 to 4000 parts by mass with respect to 100 parts by mass of the addition curable silicone polymer component (component A + component B). Thus, the heat-resistant thermally conductive composition and the heat-resistant thermally conductive sheet can have a thermal conductivity of 0.8 W/m·K or more. The thermally conductive filler is preferably composed of at least one selected from alumina, zinc oxide, magnesium oxide, aluminum nitride, boron nitride, aluminum hydroxide, silicon carbide, and silica. The thermally conductive filler may have various shapes such as spherical, scaly, and polyhedral The specific surface area of the thermally conductive filler is preferably 0.06 to 15 $m^2/g$. The specific surface area is a BET specific surface area and is measured in accordance with JIS R 1626. The average particle size of the thermally conductive filler is preferably 0.1 to 100 μm. The particle size may be measured with a laser diffraction scattering method to determine D50 (median diameter) in a volume-based cumulative particle size distribution. The method may use, e.g., a laser diffraction/scattering particle size distribution analyzer LA-950 S2 manufactured by HORIBA, Ltd.

The inorganic filler may include at least two types of particles with different average particle sizes. This is because small-size particles fill the spaces between large-size particles, which can provide nearly closest packing and improve the thermal conductive properties and other properties such as heat insulation, electromagnetic wave absorption, and material strength.

A part or all of the inorganic filler may be surface treated with a silane coupling agent. The silane coupling agent may be previously mixed with the inorganic filler and heat treated (i.e., a pretreatment method) or may be added when the base polymer, the curing catalyst, and the inorganic particles are mixed (i.e., an integral blend method). In the pretreatment method and the integral blend method, the silane coupling agent is preferably added in an amount of 0.01 to 10 parts by mass with respect to 100 parts by mass of the inorganic filler. The surface treatment facilitates the impregnation of the base polymer with the inorganic filler and prevents the adsorption of the curing catalyst on the inorganic filler, thereby preventing curing inhibition. This is useful for storage stability.

The silane coupling agent is preferably a silane compound or its partial hydrolysate. The silane compound is expressed by $R_aSi(OR')_{3-a}$, where R represents a substituted or unsubstituted organic group having 1 to 20 carbon atoms, R' represents an alkyl group having 1 to 4 carbon atoms, and a is 0 or 1. Examples of the alkoxysilane compound (simply referred to as "silane" in the following) include the following: methyltrimethoxysilane; ethyltrimethoxysilane; propyltrimethoxysilane; butyltrimethoxysilane; pentyltrimethoxysilane; hexyltrimethoxysilane; hexyltriethoxysilane; octyltrimethoxysilane; octyltriethoxysilane; decyltrimethoxysilane; decyltriethoxysilane; dodecyltrimethoxysilane; dodecyltriethoxysilane; hexadecyltrimethoxysilane; hexadecyltriethoxysilane; octadecyltrimethoxysilane; and octadecyltriethoxysilane. These silane compounds may be used individually or in combinations of two or more. The alkoxysilane may be used together with one-end silanol siloxane or one-end trimethoxysilylpolysiloxane as the surface treatment agent. In this case, the surface treatment may include adsorption in addition to a covalent bond.

(5) Heat resistance improver (component E)

The component E may be added in the form of powder or mixed with a resin to prepare a masterbatch. The resin used for the masterbatch is preferably a silicone polymer. The silicone polymer may be either a curable silicone polymer or a silicone polymer having no reactive group, and both of them may be used.

(6) Other addition agents

The composition of the present invention may include components other than the above as needed. For example, a heat resistance improver (such as colcothar, titanium oxide, or cerium oxide), a flame retardant auxiliary, and a curing retarder may be added Moreover, an organic or inorganic particle pigment may be added for the purpose of coloring and toning. Alkoxy group-containing silicone may be added as a material, e.g., for the surface treatment of a filler. An organopolysiloxane having no addition curing reactive group may also be added The viscosity of the organopolysiloxane is preferably 10 to 100,000 mPa·s, and more preferably 100 to 10,000 mPa·s at 25°C in terms of workability.

Examples

Hereinafter, the present invention will be described by way of examples. However, the present invention is not limited to the following examples. Various parameters were measured in the following manner.

<Thermal conductivity>

The thermal conductivity of a thermally conductive silicone composite material sheet was measured by a hot disk (in accordance with ISO/CD 22007-2). As shown in FIG. 1A, using a thermal conductivity measuring apparatus 1, a polyimide film sensor 2 was sandwiched between two samples 3a, 3b, and constant power was applied to the sensor 2 to generate a certain amount of heat. Then, the thermal characteristics were analyzed from the value of a temperature rise of the sensor 2. The sensor 2 has a tip 4 with a diameter of 7 mm. As shown in FIG. 1B, the tip 4 has a double spiral structure of electrodes. Moreover, an electrode 5 for an applied current and an electrode 6 for a resistance value (temperature measurement electrode) are located on the lower portion of the sensor 2. The thermal conductivity was calculated by the following formula (1).

[Formula 1]

$$\lambda = \frac{Po \cdot D(\tau)}{\pi^{3/2} \cdot r} \cdot \frac{D(\tau)}{\Delta T(\tau)}$$

| | |
|---|---|
| $\lambda$: | Thermal conductivity (W/m·K) |
| $P_0$: | Constant power (W) |
| r: | Radius of sensor (m) |
| $\tau$: | $\sqrt{\alpha \cdot t / r^2}$ |
| $\alpha$: | Thermal diffusivity of sample ($m^2/s$) |
| t: | Measuring time (s) |
| $D(\tau)$: | Dimensionless function of $\tau$ |
| $\Delta T(\tau)$: | Temperature rise of sensor (K) |

<Heat resistance test 1: flexibility test>

A silicone resin sheet 7 with a length of 100 mm, a width of 20 mm, and a thickness of 2 mm was prepared and heat treated at a predetermined temperature for a predetermined time. Then, as shown in FIG. 2, the silicone resin sheet 7 was held horizontally by a holder 8. In this case, a portion of the silicone resin sheet 7, indicated by L1 (40 mm), was sticking out of the holder 8 and the remaining portion, indicated by L2 (60 mm), was located in the holder 8. Reference numeral 7' represents the silicone resin sheet hanging down from the holder 8. An asymptote passing through the end portion of the silicone resin sheet 7' hanging under its own weight from the edge of the holder 8 was determined, and an angle $\theta$ between the asymptote and the horizontal line extending from the holder 8 was measured. The shorter the heat treatment time, the more likely the silicone resin sheet was to hang at right angles, i.e., to bend 90°. However, the silicone resin sheet would not bend as curing and degradation proceeded, and thus the angle approached zero. In other words, the larger the angle $\theta$, the higher the heat resistance. The average of the results of three tests was obtained in the flexibility test.

FIG. 3 is a measurement photograph of the heat resistance test (flexibility test).

<Heat resistance test 2: penetration test>

A silicone resin sample was heat treated at a predetermined temperature for a predetermined time. Then, a penetration of the silicone resin sample was measured in accordance with JIS K 2220 (1/4 cone). The silicone resin was more flexible and had higher heat resistance as the value of the penetration became higher. The average of the results of three tests was obtained and taken as the penetration.

(Example 1)

(1) Base polymer

A two-part addition curable silicone polymer, which was to be a silicone gel after curing, was used. One solution (solution A) contained a base polymer component (component A) and a platinum group metal catalyst (component C). The other solution (solution B) contained a base polymer component (component A) and an organohydrogenpolysiloxane as a crosslinking agent component (component B).

(2) Heat resistance improver

0.04 g of anthraquinone P.B. 60 represented by the Chemical Formula 1 and 0.02 g of 3-glycidoxypropyltrimethoxysilane (epoxy compound) represented by the Chemical Formula 5, which was 0.94 mole times the amount of anthraquinone, were added to 30.0 g of dimethyl silicone oil (with a viscosity of 300 cs at 25°C), and then uniformly mixed and diluted (referred to as a "heat resistance improver 1" in the following).

(3) Mixing and molding of cured product

3.0 g of the heat resistance improver 1 was added to 100 g of the two-part addition curable silicone polymer, and then uniformly mixed to prepare a composition. The heat resistance improver 1 had been diluted with silicone oil. Therefore, assuming that the silicone oil was included in the silicone resin, the content of the heat resistance improver 1 was 0.0039 parts by mass with respect to 100 parts by mass of the silicone resin.
The mixture was poured into a 200 mL beaker and subsequently heated at 100°C for 30 minutes, resulting in a silicone gel cured product.

(Comparative Example 1)

Comparative Example 1 was performed in the same manner as Example 1 except that the heat resistance improver was not added. Table 1 shows the results.

[TABLE 1]

| Heat treatment time at 220°C (hr) | Example 1 penetration (1/10 mm) | Comparative Example 1 penetration (1/10 mm) |
|---|---|---|
| 0 | 67 | 65 |
| 47 | 72 | 68 |
| 116 | 74 | 70 |
| 184 | 62 | 49 |
| 275 | 23 | (*) |
| (*) Not measurable due to high hardness | | |

As can be seen from Table 1, the heat-resistant silicone resin in Example 1 was flexible even after the heat treatment at a high temperature for a long time, and had higher heat resistance than the silicone resin in Comparative Example 1.

(Example 2)

A mixture was obtained in the same manner as Example 1 except that the mixture used quinacridone P.V. 19 represented by the Chemical Formula 2 as a heat resistance improver, contained a thermally conductive filler, and had the composition as shown in FIG. 2. The resulting composition was sandwiched between polyethylene terephthalate (PET) films, which had been subjected to a release treatment, and molded into a sheet with a thickness of 2.0 mm by a roll press. Then, the sheet was heated at 100°C for 30 minutes and cured to form a silicone gel sheet. The thermally conductive filler was surface treated with a silane coupling agent (decyltrimethoxysilane). Specifically, 0.66 parts by mass of the silane coupling agent was applied to 100 parts by mass of the thermally conductive filler, and heat treated at 120°C for 12 hours so that the silane coupling agent adhered to the thermally conductive filler (i.e., the pretreatment

method). This treatment prevented a reduction in the curing reaction that was the catalytic ability of the platinum group metal catalyst (component C). The average particle size is D50 (median diameter) in a volume-based cumulative particle size distribution measured by a laser diffraction scattering method The method may use, e.g., a laser diffraction/scattering particle size distribution analyzer LA-950 S2 manufactured by HORIBA, Ltd. The thermally conductive silicone gel sheet thus obtained had an Asker C hardness of 44 and a thermal conductivity of 4.4 W/m·K after curing.

[TABLE 2]

| Additives | | Amount added (g) | Part by mass |
|---|---|---|---|
| Base polymer | Two-part addition curable silicone polymer | 180 | 100 |
| | Dimethyl silicone oil (viscosity: 100 cs, 25°C) | 20 | |
| Thermally conductive filler | Crushed alumina (average particle size: 0.2 μm) | 220 | 1560 |
| | Crushed alumina (average particle size: 2 μm) | 900 | |
| | Spherical alumina (35 to 75 μm) | 2000 | |
| Heat resistance improver (quinacridone P.V. 19) | | 0.04 | 0.33 |

(Example 3)

Example 3 was performed in the same manner as Example 2 except that quinacridone P.R. 122 represented by the Chemical Formula 3 was used as a heat resistance improver.

(Example 4)

Example 4 was performed in the same manner as Example 2 except that diketopyrrolopyrrole P.R. 264 represented by the Chemical Formula 4 was used as a heat resistance improver.

(Example 5)

Example 5 was performed in the same manner as Example 2 except that anthraquinone P.B. 60 represented by the Chemical Formula 1 was used as a heat resistance improver.

(Example 6)

Example 6 was performed in the same manner as Example 2 except that a compound was obtained by reacting anthraquinone P.B. 60 represented by the Chemical Formula 1 with 3-glycidoxypropyltrimethoxysilane (epoxy compound) represented by the Chemical Formula 5 in an amount of 1 mole times the amount of anthraquinone, and that this compound was used as a heat resistance improver.

(Example 7)

Example 7 was performed in the same manner as Example 2 except that 0.91 parts by mass of quinacridone P.R. 122 represented by the Chemical Formula 3 was used as a heat resistance improver.

(Example 8)

Example 8 was performed in the same manner as Example 2 except that 3.32 parts by mass of quinacridone P.R. 122 represented by the Chemical Formula 3 was used as a heat resistance improver.

(Example 9)

Example 9 was performed in the same manner as Example 2 except that 6.62 parts by mass of quinacridone P.R. 122 represented by the Chemical Formula 3 was used as a heat resistance improver.

(Comparative Example 2)

Comparative Example 2 was performed in the same manner as Example 2 except that phthalocyanine copper (PcCu) represented by the following Chemical Formula 9 was used as a heat resistance improver.

[Chemical Formula 9]

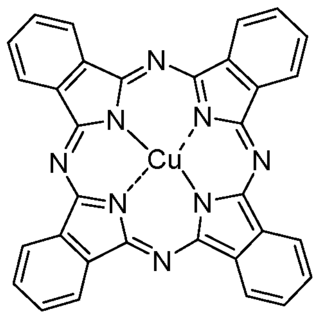

(Comparative Example 3)

Comparative Example 3 was performed in the same manner as Example 2 except that perylene PR. 149 represented by the following Chemical Formula 10 was used as a heat resistance improver.

[Chemical Formula 10]

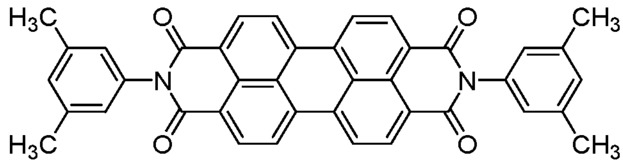

(Comparative Example 4)

Comparative Example 4 was performed in the same manner as Example 2 except that perylene P.O. 43 represented by the following Chemical Formula 11 was used as a heat resistance improver.

[Chemical Formula 11]

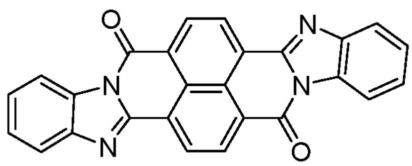

(Comparative Example 5)

Comparative Example 5 was performed in the same manner as Example 2 except that 1.33 parts by mass of phthalocyanine copper (PcCu) represented by the Chemical Formula 9 was used as a heat resistance improver.

(Comparative Example 6)

Comparative Example 6 was performed in the same manner as Example 2 except that nothing was added as a heat resistance improver.

Tables 3 and 4 show the results of the heat resistance test.

[TABLE 3]

| Example, Comparative Example | 180°C heat resistance test: flexibility test, θ (°) | | |
|---|---|---|---|
| | 0 hr | 260 hr | 500 hr |
| Example 2 (P.V. 19: 0.33 parts by mass) | 90 | 80 | 45 |
| Example 3 (P.R. 122: 0.33 parts by mass) | 90 | 80 | 40 |
| Example 4 (P.R. 264: 0.33 parts by mass) | 90 | 75 | 35 |
| Example 5 (P.B. 60: 0.33 parts by mass) | 90 | 70 | 30 |
| Example 6 (P.B. 60: 0.33 parts by mass, Chemical Formula 2:1 mole times) | 90 | 70 | 30 |
| Comparative Example 2 (PcCu: 0.33 parts by mass) | 90 | 65 | 25 |
| Comparative Example 3 (P.R. 149: 0.33 parts by mass) | 90 | 45 | 15 |
| Comparative Example 4 (P.O. 43:0.33 parts by mass) | 90 | 30 | 5 |
| Comparative Example 6 (no additive) | 90 | 55 | 5 |

[TABLE 4]

| Example, Comparative Example | 200°C heat resistance test: flexibility test, θ (°) | |
|---|---|---|
| | 0 hr | 85 hr |
| Example 7 (P.R. 122: 0.91 parts by mass) | 90 | 60 |
| Example 8 (P.R. 122: 3.32 parts by mass) | 90 | 70 |
| Example 9 (P.R. 122: 6.62 parts by mass) | 90 | 75 |
| Comparative Example 5 (PcCu: 1.33 parts by mass) | 90 | 30 |
| Comparative Example 6 (no additive) | 90 | 5 |

As can be seen from Tables 3 and 4, the results confirmed that Examples 2 to 9 had higher heat resistance in the 180°C and 200°C heat resistance (flexibility) tests.

Industrial Applicability

The heat-resistant silicone resin composition and the heat-resistant silicone resin composite material of the present invention are suitable to be interposed between a heat generating member and a heat dissipating material of electrical and electronic components or the like. In particular, the heat-resistant silicone resin composition and the heat-resistant silicone resin composite material use the heat resistance improver containing no metal atom, and do not easily become hard even at high temperatures. This can be a great advantage for electronic and electrical components.

Description of Reference Numerals

| | |
|---|---|
| 1 | Thermal conductivity measuring apparatus |
| 2 | Sensor |
| 3a, 3b | Sample |
| 4 | Tip of the sensor |
| 5 | Electrode for applied current |
| 6 | Electrode for resistance value (temperature measurement electrode) |
| 7,7’ | Silicone sheet |
| 8 | Holder |
| θ | Angle |

## Claims

1. A heat-resistant silicone resin composition comprising a silicone resin and a heat resistance improver, wherein the heat resistance improver is an organic polycyclic aromatic compound having one or more secondary amino groups and one or more ketone groups in a ring structure.

2. The heat-resistant silicone resin composition according to claim 1, wherein the heat resistance improver is at least one compound selected from the group consisting of anthraquinone, quinacridone, diketopyrrolopyrrole, and compounds obtained by mixing or reacting each of anthraquinone, quinacridone, and diketopyrrolopyrrole separately with an epoxy compound in an amount of 1 mole times or less their respective amounts.

3. The heat-resistant silicone resin composition according to claim 1 or 2, wherein a content of the heat resistance improver is 0.001 to 10 parts by mass with respect to 100 parts by mass of the silicone resin.

4. The heat-resistant silicone resin composition according to any one of claims 1 to 3, wherein the heat resistance improver is diluted with silicone oil and added.

5. The heat-resistant silicone resin composition according to any one of claims 1 to 4, wherein the heat-resistant silicone resin composition is in at least one state selected from the group consisting of a liquid state, a gel state, and a rubber state.

6. A silicone resin composite material comprising:

   the heat-resistant silicone resin composition according to any one of claims 1 to 5; and
   at least one filler selected from the group consisting of an inorganic filler and an organic filler,
   wherein the at least one filler is contained in the heat-resistant silicone resin composition.

7. The silicone resin composite material according to claim 6, wherein a content of the filler is 1 to 7000 parts by mass with respect to 100 parts by mass of the silicone resin.

8. The silicone resin composite material according to claim 6 or 7, wherein the silicone resin composite material is in at least one state selected from the group consisting of a gel state and a rubber state, and is in the form of a sheet.

9. The silicone resin composite material according to any one of claims 6 to 8, wherein the filler is at least one filler selected from the group consisting of a thermally conductive filler, an electromagnetic wave absorbing filler, a filler for improving heat insulation, and a filler for improving strength.

10. The silicone resin composite material according to claim 9, wherein the thermally conductive filler is composed of inorganic particles of at least one selected from the group consisting of alumina, zinc oxide, magnesium oxide, aluminum nitride, boron nitride, aluminum hydroxide, silicon carbide, and silica.

11. The silicone resin composite material according to claim 9 or 10, wherein the electromagnetic wave absorbing filler is composed of inorganic particles of at least one selected from the group consisting of a soft magnetic metal powder and an oxide magnetic powder.

12. The silicone resin composite material according to any one of claims 9 to 11, wherein the filler for improving heat insulation is composed of particles of at least one selected from the group consisting of glass balloon, silica balloon, Shirasu balloon, carbon balloon, alumina balloon, zirconia balloon, phenol balloon, acrylonitrile balloon, and vinylidene chloride balloon.

13. The silicone resin composite material according to any one of claims 9 to 12, wherein the filler for improving strength is composed of at least one selected from the group consisting of silica, glass fiber, carbon fiber, cellulose nanofiber, graphite, and graphene.

14. The silicone resin composite material according to any one of claims 9 to 13, wherein the filler is an inorganic filler, and at least a part of the filler is surface treated with a silane coupling agent including a silane compound expressed by $R_aSi(OR')_{3-a}$ (where R represents a substituted or unsubstituted organic group having 1 to 20 carbon atoms, R' represents an alkyl group having 1 to 4 carbon atoms, and a is 0 or 1) or a partial hydrolysate of the silane compound

**15.** The silicone resin composite material according to claim 14, wherein the silane coupling agent is applied in an amount of 0.01 to 10 parts by mass with respect to 100 parts by mass of the inorganic filler.

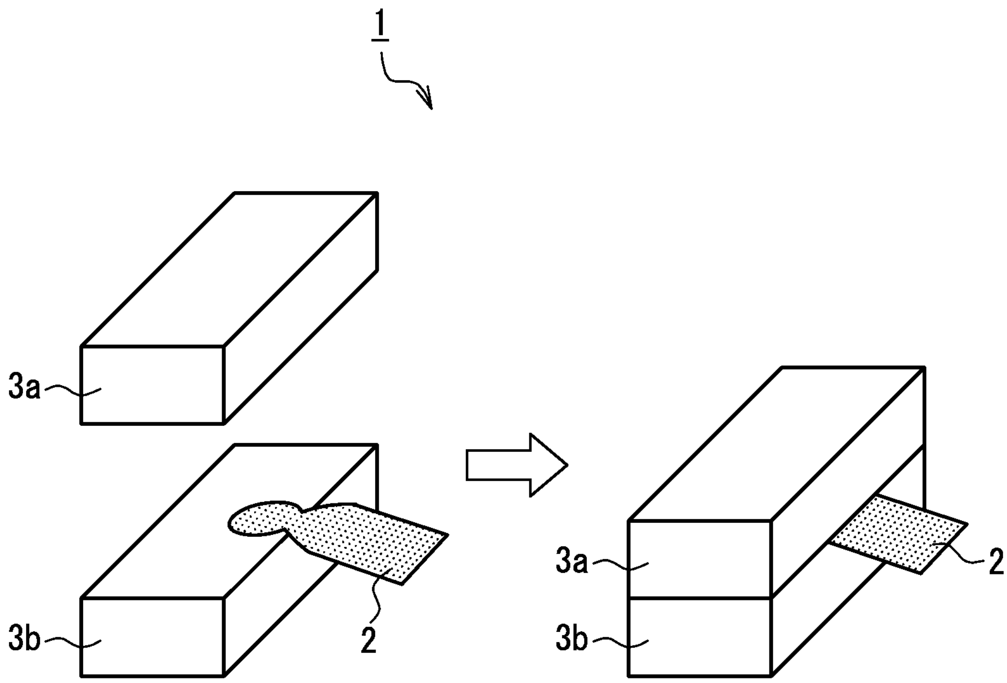


FIG. 1A

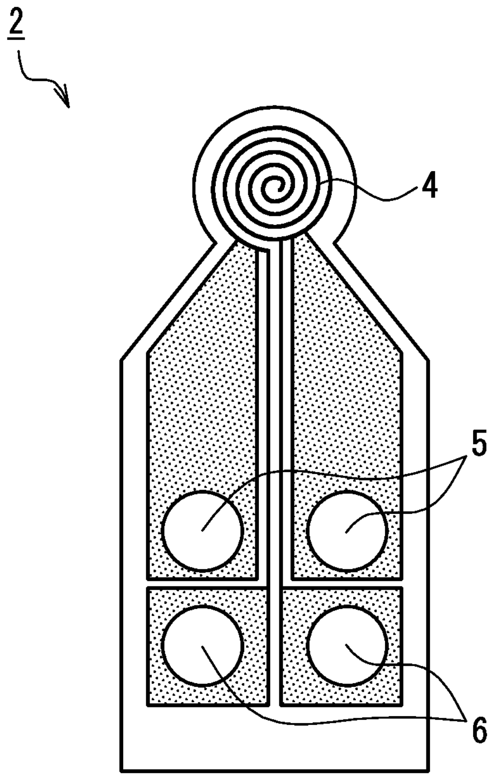


FIG. 1B

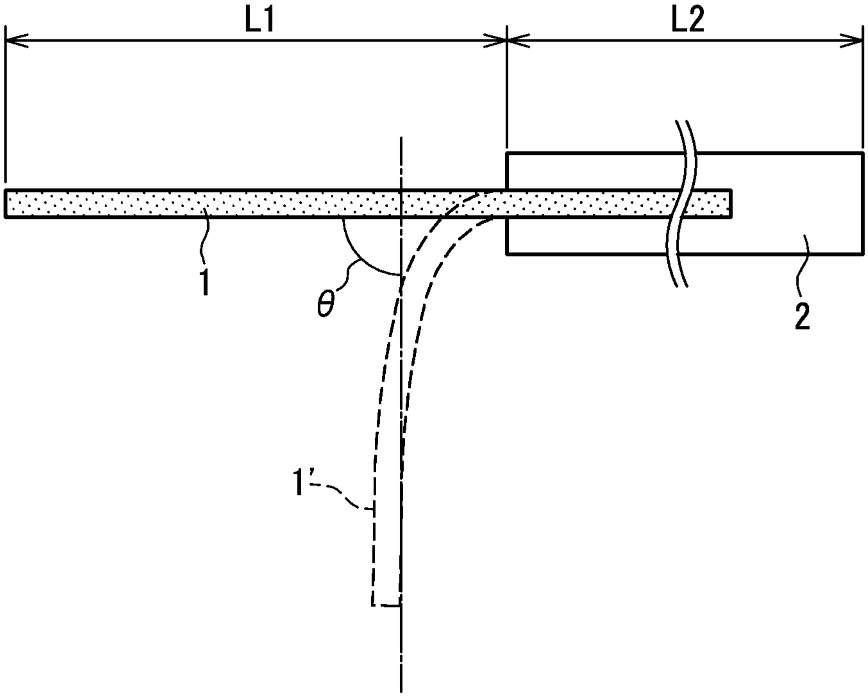


FIG. 2

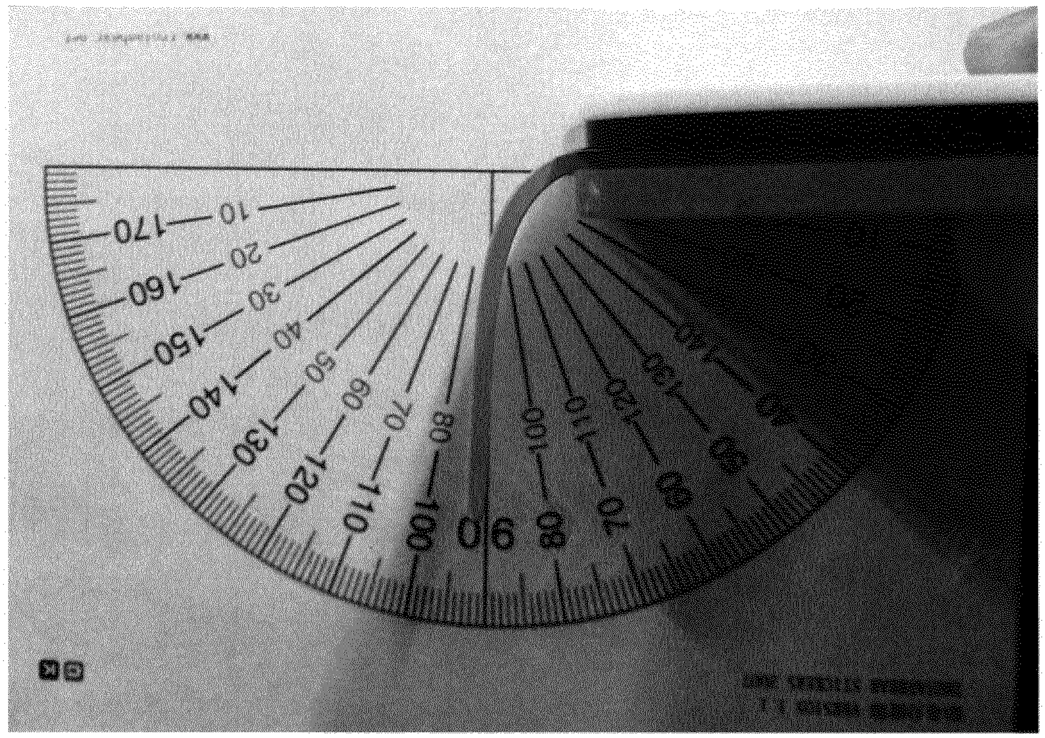

FIG. 3

## INTERNATIONAL SEARCH REPORT

International application No. PCT/JP2020/037637

**A. CLASSIFICATION OF SUBJECT MATTER**

C08K 5/34(2006.01)i; C08L 83/04(2006.01)i; C08K 3/013(2018.01)i
FI: C08L83/04; C08K5/34; C08K3/013

According to International Patent Classification (IPC) or to both national classification and IPC

**B. FIELDS SEARCHED**

Minimum documentation searched (classification system followed by classification symbols)
C08K5/34; C08L83/04; C08K3/013

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 5-140455 A (TOSHIBA SILICONE CO., LTD.) 08 June 1993 (1993-06-08) paragraphs [0014], [0016] | 1-3, 5-13<br>4, 14, 15 |
| X<br>Y | JP 5-140471 A (TOSHIBA SILICONE CO., LTD.) 08 June 1993 (1993-06-08) paragraphs [0007], [0010]-[0012] | 1-3, 5-13<br>4, 14, 15 |
| Y | JP 60-166343 A (SHIN-ETSU CHEMICAL CO., LTD.) 29 August 1985 (1985-08-29) page 2, upper left column, line 5 to upper right column, line 6 | 4 |
| Y | JP 59-176347 A (TORAY SILICONE COMPANY, LIMITED) 05 October 1984 (1984-10-05) page 4, upper right column, line 17 to lower left column, line 6 | 4 |
| Y | WO 2019/098290 A1 (FUJI POLYMER INDUSTRIES CO., LTD.) 23 May 2019 (2019-05-23) paragraphs [0037], [0048] | 14, 15 |
| Y | JP 2017-206624 A (FUJI POLYMER INDUSTRIES CO., LTD.) 24 November 2017 (2017-11-24) paragraphs [0037], [0042] | 14, 15 |

☐ Further documents are listed in the continuation of Box C.  ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 07 December 2020 (07.12.2020) | 15 December 2020 (15.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.
PCT/JP2020/037637

| Patent Documents referred in the Report | Publication Date | Patent Family | Publication Date |
|---|---|---|---|
| JP 5-140455 A | 08 Jun. 1993 | (Family: none) | |
| JP 5-140471 A | 08 Jun. 1993 | (Family: none) | |
| JP 60-166343 A | 29 Aug. 1985 | (Family: none) | |
| JP 59-176347 A | 05 Oct. 1984 | US 4477626 A<br>column 5, lines 45-53<br>EP 124235 A1 | |
| WO 2019/098290 A1 | 23 May 2019 | US 2020/0010621 A1<br>paragraphs [0045], [0083]<br>CN 110546208 A | |
| JP 2017-206624 A | 24 Nov. 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016518468 A
- JP 2014503680 A
- JP 2014534292 A
- JP 2017057386 A
- JP 2019167473 A
- WO 2017131007 A1
- JP 2017014399 A